# DEMANDE DE BREVET EUROPEEN

(11) **EP 1 048 892 A1**
(43) Date de publication de la demande: **02.11.2000**
(21) Numéro de dépôt: 00400919.7
(22) Date de dépôt: 03.04.2000
(51) Int. Cl.: F17D 1/05, E21B 37/06

(54) **Formulation d'additifs pour améliorer le transport d'effluents pétroliers susceptibles de contenir des hydrates et procédé utilisant cette formulation**

(30) Priorité: 29.04.1999 FR 9905589
(71) Demandeur: INSTITUT FRANCAIS DU PETROLE, 92852 Rueil-Malmaison Cedex (FR)
(72) Inventeur: Sinquin, Anne, 92000 Nanterre (FR); Velly, Marie, 78360 Montesson (FR); Cingotti, Béatrice, 92160 Antony (FR); Durand, Jean-Pierre, 78400 Chatou (FR)

(57) **Abrégé**

Pour améliorer le transport d'effluents pétroliers comprenant de l'eau, du gaz et éventuellement une phase hydrocarbonée liquide dans des conditions thermodynamiques susceptibles de conduire à la formation d'hydrates, on ajoute à l'effluent à transporter une formulation contenant au moins deux additifs dont l'un au moins se comporte comme un agent de nucléation des cristaux d'hydrates.

## Description

L'invention concerne une formulation d'additifs destinée à améliorer le transport d'effluents pétroliers au sein desquels peuvent se former des hydrates de gaz naturel, de gaz de pétrole ou d'autres gaz. Elle concerne également le procédé utilisant une telle formulation.

Les gaz qui forment des hydrates peuvent notamment comprendre au moins un hydrocarbure choisi parmi le méthane, l'éthane, l'éthylène, le propane, le propène, le n-butane et l'isobutane, et éventuellement de l'H₂S et/ou du CO₂.

Ces hydrates se forment lorsque l'eau se trouve en présence de gaz, soit à l'état libre, soit à l'état dissous dans une phase liquide, telle qu'un hydrocarbure liquide, et lorsque la température atteinte par le mélange notamment d'eau, de gaz et éventuellement d'hydrocarbures liquides, tels que de l'huile, devient inférieure à la température thermodynamique de formation des hydrates, cette température étant donnée pour une composition de gaz connue et lorsque leur pression est fixée.

La formation d'hydrates peut être redoutée notamment dans les industries pétrolière et gazière, pour lesquelles les conditions de formation d'hydrates peuvent être réunies. En effet, pour diminuer le coût de production du pétrole brut et du gaz, tant au point de vue des investissements qu'au point de vue de l'exploitation, une voie envisagée, notamment en production en mer, est de réduire, voire de supprimer, les traitements appliqués au brut ou au gaz à transporter du gisement à la côte et notamment de laisser toute ou une partie de l'eau dans le fluide à transporter. Ces traitements en mer s'effectuent en général sur une plate-forme située en surface à proximité du gisement, de manière que l'effluent, initialement chaud, puisse être traité avant que les conditions thermodynamiques de formation des hydrates ne soient atteintes du fait du refroidissement de l'effluent avec l'eau de mer.

Cependant, comme cela arrive pratiquement lorsque les conditions thermodynamiques requises pour former des hydrates sont réunies, l'agglomération des hydrates entraîne le blocage des conduites de transport par création de bouchons, qui empêchent tout passage de pétrole brut ou de gaz.

La formation de bouchons d'hydrates peut entraîner un arrêt de la production et provoquer ainsi des pertes financières importantes. De plus, la remise en service de l'installation, surtout s'il s'agit de production ou de transport en mer, peut être longue, car la décomposition des hydrates formés est très difficile à réaliser. En effet, lorsque la production d'un gisement sous-marin de gaz naturel ou de pétrole et de gaz comportant de l'eau atteint la surface du sol marin et est ensuite transportée au fond de la mer, il arrive, par l'abaissement de la température de l'effluent produit, que les conditions thermodynamiques soient réunies pour que les hydrates se forment, s'agglomèrent et bloquent les conduites de transfert. La température au fond de la mer peut être, par exemple, de 3 ou 4°C.

Des conditions favorables à la formation d'hydrates peuvent être réunies de la même façon à terre, pour des conduites pas (ou pas assez profondément) enfouies, lorsque la température de l'air ambiant est suffisamment froide.

Pour éviter ces inconvénients, on a cherché, dans l'art antérieur, à utiliser des produits qui, ajoutés au fluide, pourraient agir comme inhibiteurs en abaissant la température thermodynamique de formation des hydrates. Ce sont notamment des alcools, tels que le méthanol, ou des glycols, tels que le mono-, le di- ou le triéthylèneglycol. Toutefois, pour être efficaces, ces produits doivent être utilisés en grandes quantités (10 à 40 % en masse de la teneur en eau), ce qui entraîne deux inconvénients majeurs : des coûts de production élevés et d'importants problèmes de pollution.

On a également préconisé d'isoler les conduites de transport, de manière à éviter que la température du fluide transporté n'atteigne la température de formation des hydrates dans les conditions opératoires. Une telle technique est, elle aussi, très coûteuse.

Deux procédés basés sur l'utilisation d'additifs à de faibles teneurs (moins de 1 % en masse par rapport à l'eau) ont également été proposés.

Le premier procédé utilise des tensioactifs, de préférence polymères, dispersants d'hydrates qui permettent de véhiculer les hydrates sous forme de suspension dans l'effluent considéré. Un tel procédé a été abondamment décrit et notamment par la demanderesse dans des brevets antérieurs, par exemple dans les brevets EP-B-323 774 et EP-B-323 775.

Le second procédé est basé sur l'ajout d'additifs hydrosolubles (dits inhibiteurs cinétiques) susceptibles de modifier la cristallisation des hydrates (germination/croissance/agglomération), afin que le temps de transport des effluents dans les conduites soit inférieur au temps précédant la formation des hydrates ou au temps mis par les hydrates pour croître et/ou s'agglomérer et former un bouchon. Les inhibiteurs cinétiques préconisés dans l'art antérieur dans un tel procédé sont des polymères ou copolymères hydrosolubles qui allongent très notablement le temps de formation des hydrates et diminuent fortement la vitesse de croissance des cristaux d'hydrates. De tels inhibiteurs cinétiques utilisés seuls ou en mélanges sont notamment décrits dans les brevets et demandes de brevets suivants :
WO-A-97/13 824 ; US-A-5 723 524 ; US-A-5 744 665 ; WO-A-94/12 761 ; WO-A-96/29 501 et WO-A-96/04 462.

De tels additifs, s'ils permettent de retarder notablement la formation des hydrates, présentent néanmoins l'énorme inconvénient de conduire à une formation incontrôlée d'hydrates lorsque les limites d'utilisation de ces additifs sont atteintes.

On a maintenant découvert une formulation d'additifs hydrosolubles qui permet d'améliorer le transport d'effluents pétroliers comprenant de l'eau, du gaz et éventuellement une phase liquide hydrocarbonée dans des conditions thermodynamiques susceptibles de conduire à la formation d'hydrates, cette formulation d'additifs ayant pour caractéristique essentielle de mieux contrôler la formation des hydrates par la création de très nombreux petits cristaux et d'éviter l'inconvénient précité et difficilement prévisible des formulations d'inhibiteurs cinétiques de l'art antérieur.

Ainsi, la présente invention propose une formulation d'additifs et un procédé pour améliorer le transport des hydrates au sein d'un fluide comprenant de l'eau, du gaz et éventuellement une phase hydrocarbonée liquide, dans des conditions où des hydrates peuvent se former à partir d'eau et du gaz, caractérisé en ce qu'on incorpore audit fluide, avant formation des hydrates, ladite formulation d'additifs comprenant au moins deux additifs dont l'un au moins se comporte comme agent de nucléation des cristaux d'hydrates.

Dans les formulations de la présente invention, le (ou les) agent(s) de nucléation est (sont) en général associé(s) à un ou plusieurs additifs susceptibles de contrôler la croissance des cristaux d'hydrates (inhibiteurs de croissance) et éventuellement à un ou plusieurs additifs susceptibles de contrôler leur agglomération (agents dispersant).

Un mode de réalisation préféré de l'invention consiste à associer à un agent de nucléation, à la fois un inhibiteur de croissance et un dispersant de cristaux d'hydrates. Une telle formulation permet de former beaucoup de nucléï, dont la croissance et l'agglomération sont très fortement retardées et dont les caractéristiques sont telles qu'elles ne pertuberont pas le transport du fluide qui les contient.

Les agents de nucléation présents dans les formulations de l'invention pourront être n'importe quel composé hydrosoluble susceptible de diminuer le temps de formation des hydrates. Il pourra s'agir plus particulièrement de composés hydrosolubles possédant un ou plusieurs groupements hydroxyles, tels que par exemple des alcools ou des polyols. Il pourra également s'agir de polymères hydrosolubles contenant un ou plusieurs groupements hydroxyles par unité monomère ou encore de copolymères dont l'un au moins des monomères qui les constituent possède un ou plusieurs groupements hydroxyles. On peut citer comme exemples l'alcool polyvinylique, les poly(acétate de vinyle) partiellement hydrolysés, les polyglycérols, les poly(méth)acrylates d'alkylène glycol ou encore les poly(méth)acrylates de méthyle rendu hydrosoluble par aminolyse. La masse moléculaire de tels polymères et copolymères sera de préférence relativement faible, par exemple inférieure à 50 000 et, selon un mode préféré de l'invention, inférieure à 10 000. Comme agents de nucléation, on peut encore utiliser de sels de phosphonium quaternaire.

Il est à remarquer que certains de ces agents de nucléation utilisés à forte concentration, par exemple supérieure à 10 % en masse par rapport à l'eau, se comportent comme des inhibiteurs thermodynamiques. Par ailleurs, certains des agents de nucléation de type polymère ou copolymère de la présente invention peuvent perdre leur caractéristique spécifique d'agent de nucléation si leur masse moléculaire est trop élevée.

Un deuxième constituant éventuellement présent dans les formulations d'additifs de l'invention peut consister en un inhibiteur de croissance. Il pourra s'agir de n'importe quel composé polymère hydrosoluble susceptible de diminuer la vitesse de croissance des hydrates de gaz. Il pourra par exemple s'agir de composés polymères, précédemment décrits dans des brevets au nom de la demanderesse, tels que les copolymères hydrosolubles associatifs décrits dans le brevet US-A-5 817 898 ou encore les copolymères hydrosolubles ne contenant pas d'hétérocycle mais contenant au moins un groupement sulfonate décrits dans le brevet US-A-5 789 635 ou encore les polymères et copolymères cationiques décrits dans le brevet français FR-B-2 748 773. La masse moléculaire des inhibiteurs de croissance utilisés dans la formulation de l'invention sera relativement élevée et de préférence supérieure à 50 000.

Un troisième constituant éventuellement présent dans les formulations d'additifs de l'invention peut consister en un dispersant susceptible d'empêcher l'agglomération des cristaux d'hydrates une fois formés. Il pourra par exemple être choisi parmi les composés amphiphiles non ioniques, anioniques, cationiques ou amphotères. De tels composés de faible masse moléculaire, par exemple inférieure à 10 000, de préférence à 5000, auront un équilibre hydrophile-lipophile (HLB) tel qu'ils seront solubles ou tout au moins dispersables dans l'eau.

Parmi les additifs dispersants utilisables comme troisième constituant des formulations de l'invention, on peut citer des compositions à caractère amphiphile non-ionique, telles que par exemple les polyisobuténylsuccinates de polyéthylèneglycol.

On peut encore citer les compositions à caractère amphiphile non-ionique obtenues par réaction d'au moins une huile végétale insaturée polymérisée avec un aminoalcool. L'aminoalcool peut consister en la monoéthanolamine ou la diéthanolamine. De telles compositions ont été décrites par la demanderesse notamment dans la demande de brevet EP-A-0 905 125. L'utilisation de ces compositions comme aditifs dispersants d'hydrates est décrite dans la demande de brevet EP-A-0 905 350. La description de ces documents de brevets est ici incorporée par référence du seul fait de leur mention dans la présente description.

Les formulations d'additifs préférées de l'invention contiennent à la fois au moins un agent de nucléation, au moins un inhibiteur de croissance et au moins un dispersant des cristaux d'hydrates, chacun en une proportion allant par exemple de 5 à 50 %.

Le procédé selon l'invention visant à améliorer le transport d'un effluent pétrolier comprenant de l'eau, du gaz et éventuellement une phase hydrocarbonée liquide dans des conditions thermodynamiques où des hydrates peuvent se former à partir de l'eau et du gaz, comprend l'incorporation audit effluent d'une formulation d'additifs tels que décrite ci-dessus.

La formulation d'additifs de l'invention est en général ajoutée à l'effluent pétrolier à traiter à une concentration de 0,05 à 5 % en masse, de préférence de 0,2 à 2 % en masse, par rapport à la teneur en eau dudit effluent.

Plus particulièrement, la teneur en agent de nucléation introduit est d'au plus 2 % en masse, de préférence d'au plus 0,5 % en masse, la teneur en inhibiteur de croissance d'au plus 2 % en masse, de préférence d'au plus 1 % en masse, et la teneur en dispersant d'au plus 1 % en masse, de préférence d'au plus 0,5 % en masse, par rapport à l'eau présente dans l'effluent pétrolier à traiter.

### EXEMPLES

Les exemples suivants illustrent l'invention mais ne doivent en aucune manière être considérés comme limitatifs. Les exemples 1, 2 et 3 sont donnés à titre comparatif.

Dans ces exemples, pour tester l'efficacité des formulations selon l'invention (par comparaison avec des additifs de référence) en présence d'hydrates de méthane, on a procédé à des essais de formation d'hydrates à partir de gaz, de condensat et d'eau à l'aide de l'appareillage décrit ci-après.

L'appareil comporte une boucle de 10 mètres constituée de tubes de diamètre intérieur égal à 7,7 mm, un réacteur de 2 litres comprenant une entrée et une sortie pour le gaz, une aspiration et un refoulement pour le mélange eau, condensat et éventuellement additif initialement introduit. Le réacteur permet de mettre la boucle sous pression. Des tubes de diamètre analogue à celui de la boucle assurent la circulation du fluide de la boucle au réacteur, et inversement, par l'intermédiaire d'une pompe à engrenages placée entre les deux. Une cellule saphir intégrée dans le circuit permet une visualisation du liquide en circulation et des hydrates quand ils se forment.

Pour déterminer l'efficacité des additifs ou des formulations d'additifs selon l'invention, on introduit le fluide (eau et condensat ou solution aqueuse d'additif et condensat) dans le réacteur. L'installation est ensuite portée sous une pression de 7 MPa. La solution est homogénéisée par sa circulation dans la boucle et le réacteur pendant 1 heure à 20 °C. La pression est maintenue constante par apport de méthane, et on impose une diminution progressive de la température (0,5 °C/min) de 20 °C à 3 °C, cette dernière valeur correspondant à la température expérimentale choisie.

Le principe de ces essais est de déterminer, d'une part la température de formation des hydrates de méthane dans la boucle et d'autre part d'évaluer la vitesse de croissance et la quantité de cristaux d'hydrates formés. La formation des hydrates est détectée par une exothermie et une augmentation de la consommation de gaz.

### EXEMPLE 1 (comparatif)

En l'absence d'additif (milieu : eau désionisée et condensat - 30/70 % en volume), les hydrates de méthane se forment à une température voisine de 10,8 °C. A partir de la formation des premiers cristaux, on observe deux phases en ce qui concerne la consommation de gaz. Dans la première phase (environ 5 minutes), l'apport en gaz est très faible, ce qui indique qu'un certain nombre de germes d'hydrate se sont formés dans le système. Ces germes sont dans une phase de croissance lente et ensemencent le milieu. Dans la seconde phase, la consommation de gaz devient extrêmement importante (ouverture maximale du débitmètre) jusqu'au blocage complet de la circulation du fluide dans l'ensemble boucle et réacteur. La seconde phase correspond à la croissance explosive des cristaux formés dans la première phase et à leur agglomération pour finalement former un bouchon dans la conduite. Cette phase dure 28 minutes et la consommation totale est en moyenne de 17 normaux litres.

### EXEMPLE 2 (comparatif)

Si dans l'Exemple 1, toutes choses étant égales par ailleurs, on ajoute dans l'eau 0,3 % en masse d'un inhibiteur cinétique de formation des hydrates, produit commercialisé sous l'appellation VC-713, représentatif des additifs actuellement commercialisés, on observe une température de formation des hydrates de 3,3 °C. En ce qui concerne la consommation de gaz, la première phase est inexistante et la seconde phase demeure équivalente à celle du mélange « eau sans additif + condensat » décrite dans l'Exemple 1 (ouverture maximale du débitmètre). Dans cet exemple, la formation des premiers nucléï d'hydrate s'accompagne immédiatement d'une croissance extrêmement rapide de ceux-ci, car la force motrice du système est très importante et en conséquence la première phase de consommation lente disparaît. Ce comportement indique clairement que lorsque l'additif cinétique devient inefficace, la formation et surtout la croissance des cristaux d'hydrate sont explosives et le blocage de la conduite est rapide.

### EXEMPLE 3 (comparatif)

Si dans l'Exemple 1, toutes choses étant égales par ailleurs, on ajoute dans l'eau 0,1 % en masse d'un alcool polyvinylique identifié comme étant un promoteur de nucléï d'hydrate, on observe une température de formation des hydrates de 11,0 °C. En ce qui concerne la consommation de gaz, la première phase est inexistante, la seconde phase correspondant à la croissance et à l'agglomération des cristaux est extrêmement rapide et le bouchage total de la conduite intervient après 15 minutes de consommation maximale correspondant à ouverture à 100 % du débitmètre. Dans ce cas, l'additif agit bien comme promoteur d'hydrates, car la température de formation en sa présence est plus élevée qu'en l'absence d'additif (cf. Exemple 1). Le nombre de nucléï étant plus important et aucun composé ne s'opposant à leur croissance, la conduite se bouche très rapidement.

### EXEMPLE 4

Si dans l'Exemple 1, toutes choses étant égales par ailleurs, on ajoute dans l'eau une formulation d'additifs composée de 0,1 % en masse d'alcool polyvinylique et de 0,3 % en masse de copolymère acrylamide-acrylamidométhylpropane sulfonate de sodium, on observe une température de formation des hydrates de 2,8 °C. La consommation de gaz présente deux phases. La première phase dure une vingtaine de minutes et la seconde phase se déroule sur une durée moyenne de 75 minutes, l'ouverture du débitmètre étant d'environ un tiers de sa capacité maximale avec une diminution progressive du débit à partir de 50 minutes. Dans ce cas, la croissance des nucléï, formés grâce au promoteur de nucléation, est immédiatement bloquée par l'inhibiteur de croissance et elle ne s'accompagne pas d'exothermie, ni de consommation importante de gaz. Le milieu contient beaucoup de très petits cristaux et la force motrice du système est ainsi fortement abaissée. A partir de 2,8 °C le milieu est très appauvri en inhibiteur de croissance et quelques cristaux commencent à croître lentement, puis ils s'agglomèrent et bloquent la conduite.

### EXEMPLE 5

Dans cet exemple, on opère comme dans l'Exemple 1, toutes choses étant égales par ailleurs, en ajoutant dans l'eau une formulation d'additifs contenant 0,1 % en masse d'alcool polyvinylique, 0,3 % en masse de copolymère acrylamide-acrylamidométhylpropane sulfonate de sodium et 0,45 % en masse de copolymère oxyde d'éthylène-oxyde de propylène obtenu par condensation d'oxyde de propylène sur une molécule d'éthylène diamine, suivie de la condensation d'oxyde d'éthylène, ce copolymère ayant une masse moléculaire moyenne de 26 000 et contenant 80 % en masse d'oxyde d'éthylène.

Dans ces conditions, on observe une température de formation des hydrates de 2,6 °C. La consommation de gaz présente, comme dans l'exemple précédent, deux phases distinctes. La première phase est identique à celle obtenue dans l'Exemple 4 : pendant une vingtaine de minutes, on observe une très faible consommation de gaz. La seconde phase est très notablement prolongée et dure 140 minutes. Au cours des 120 premières minutes de cette seconde phase, l'ouverture du débitmètre est constante et d'environ 20 % de sa capacité. Le débit liquide est stable et la perte de charge est quasiment constante pendant cette période. Au cours des 20 dernières minutes, le débit devient instable. Les pertes de charge augmentent jusqu'au bouchage.

L'ajout d'un composé dispersant des hydrates au mélange « agent de nucléation + inhibiteur de croissance » conduit à une prolongation du test de plus de deux heures. En effet, lorsque les quantités d'inhibiteur de croissance deviennent insuffisantes pour bloquer efficacement leur croissance, les cristaux formés croissent lentement, car la force motrice du système est faible et, de plus, ils ne s'agglomèrent pas grâce à l'action de l'additif dispersant. Ils sont ainsi transportés sous forme d'une suspension de particules solides avec une perte de charge et un débit constant pendant plus de deux heures.

### EXEMPLE 6

On utilise la même formulation d'additifs que dans l'Exemple 5, mais on remplace le copolymère oxyde d'éthylène-oxyde de propylène par une proportion équivalente d'une composition préparée comme décrit ci-après (voir Exemple 1 de la demande de brevet EP-A-0 905 125).

Dans un ballon d'un litre, équipé d'une agitation mécanique et chauffé par l'intermédiaire d'un bain d'huile, on introduit sous atmosphère d'azote 325 g d'huile de lin polymérisée (0,37 mole), comptée en équivalent de triglycérides et possédant une viscosité de 10 Pa.s à 20 °C avec 175 g de diéthanolamine (1,66 moles). La composition correspondante en acides gras et oligomères d'acides gras de cette huile de lin polymérisée est la suivante :
- acides gras monomères : 48,8 % ;
- acides gras dimères : 31,4 % ;
- acides gras trimères : 13,0 % ; et
- oligomères supérieurs : 5,8 %.

L'indice d'acide du produit est égal à 10. On chauffe le mélange jusqu'à 160 °C. Après 15 à 20 minutes de réaction à 160 °C, le produit devient homogène et limpide. On maintient cette température de 160 °C pendant 100 minutes avant de refroidir le mélange. La dilution du produit s'effectue dans le ballon de réaction en introduisant 500 g d'une coupe d'aromatiques dont l'intervalle de distillation est compris entre 180 et 215 °C. Le mélange ainsi obtenu est un liquide jaune, d'une densité à 25 °C de 950 kg/m³, d'une viscosité à 20 °C de 0,212 Pa.s, d'un point éclair supérieur à 60 °C et d'un point d'écoulement inférieur à 20 °C. Le temps total de cette synthèse en tenant compte des temps de chauffage est compris entre 2 et 3 heures.

Dans ces conditions, on observe une température de formation des hydrates de 1,9 °C. La consommation de gaz présente, comme dans l'exemple précédent, deux phases distinctes. La première phase est identique à celle obtenue dans l'Exemple 4 : pendant une vingtaine de minutes, on observe une très faible consommation de gaz. La seconde phase est très notablement prolongée et dure 310 minutes. Au cours des 120 premières minutes de cette seconde phase, l'ouverture du débitmètre est constante et d'environ 20 % de sa capacité, puis la consommation de gaz devient quasi nulle jusqu'au début du processus de bouchage, qui intervient après 170 minutes. Le débit liquide est stable et la perte de charge est quasiment constante pendant cette période.

L'ajout d'un composé dispersant des hydrates au mélange « agent de nucléation + inhibiteur de croissance » conduit à une prolongation du test de plus de 5 heures. En effet, lorsque les quantités d'inhibiteur de croissance deviennent insuffisantes pour bloquer efficacement leur croissance, les cristaux formés croissent lentement, car la force motrice du système est faible et, de plus, ils ne s'agglomèrent pas, grâce à l'action de l'additif dispersant. Ils sont ainsi transportés sous forme d'une suspension de particules solides avec une perte de charge et un débit constant pendant plus de 5 heures.

### EXEMPLE 7

Dans cet exemple, on utilise la formulation de l'Exemple 5, dans laquelle on remplace le copolymère oxyde d'éthylène-oxyde de propylène par 0,5 % en masse d'une composition préparée comme décrit ci-après.

On fait réagir un anhydride polyisobuténylsuccinique dont le groupe polyisobutényle présente une masse moléculaire moyenne en nombre voisine de 1000 avec un polyéthylèneglycol de masse moléculaire d'environ 400, en une proportion molaire de 1/1, en utilisant comme milieu réactionnel une coupe d'hydrocarbures aromatiques commerciale. On obtient une solution de polyisobutenylsuccinate de polyéthylèneglycol en solution à 50 % en masse de matière active.

Le test est réalisé selon la même procédure que dans les exemples précédents.

Les résultats obtenus sont analogues à ceux obtenus dans l'Exemple 5.

Les observations faites dans les tests rapportés dans les Exemples 5, 6 et 7 montrent que l'adjonction aux formulations de l'invention d'un additif dispersant permet de prolonger le temps d'agglomération des hydrates de façon substantielle, en fonction de l'efficacité de l'additif considéré.

### EXEMPLE 8

Dans cet exemple, on traite un milieu d'eau désionisée et de condensat en proportions de 10/90 (% en volume). La formulation d'additifs utilisée comprend 0,1 % en masse d'alcool polyvinylique, 0,3 % en masse de copolymère acrylamide-acrylamidométhylpropane sulfonate de sodium et 0,5 % en masse du polyisobuténylsuccinate de polyéthylèneglycol tel que défini dans l'Exemple 7.

Dans ce cas, on n'observe aucun blocage de la circulation du fluide dans l'appareil de test, même après 24 heures.

## Revendications

1. Formulation pour améliorer le transport d'un effluent pétrolier comprenant de l'eau, du gaz et éventuellement une phase hydrocarbonée caractérisée en ce qu'elle comprend au moins deux additifs dont l'un au moins se comporte comme un agent de nucléation des cristaux d'hydrates.

2. Formulation selon la revendication 1 caractérisée en ce qu'elle comprend au moins un agent de nucléation et au moins un inhibiteur de croissance des cristaux d'hydrates.

3. Formulation selon l'une des revendications 1 et 2 caractérisée en ce qu'elle comprend au moins un agent de nucléation, au moins un inhibiteur de croissance des cristaux d'hydrates et au moins un dispersant des cristaux d'hydrates.

4. Formulation selon l'une des revendications 1 à 3 caractérisée en ce que ledit agent de nucléation est choisi parmi les composés hydrosolubles tels que les alcools et les polyols, les sels de phosphonium quaternaire, les polymères et copolymères dont l'un au moins des monomères qui les constituent possède un ou plusieurs groupements hydroxyles.

5. Formulation selon l'une des revendications 3 et 4 caractérisée en ce que ledit inhibiteur de croissance est un copolymère hydrosoluble associatif.

6. Formulation selon l'une des revendications 3 et 4 caractérisée en ce que ledit inhibiteur de croissance est un copolymère hydrosoluble ne contenant pas d'hétérocycle mais possédant au moins un groupement sulfonate.

7. Formulation selon l'une des revendications 3 et 4 caractérisée en ce que ledit inhibiteur de croissance est un copolymère hydrosoluble dont l'un au moins des monomères qui le constituent est un monomère cationique.

8. Formulation selon l'une des revendications 3 à 7 caractérisée en ce que ledit dispersant des cristaux d'hydrates est un composé amphiphile soluble ou dispersable dans l'eau.

9. Formulation selon la revendication 8 caractérisée en ce que ledit dispersant des cristaux d'hydrates est un composé amphiphile non ionique.

10. Formulation selon la revendication 8 caractérisée en ce que ledit dispersant des cristaux d'hydrates est un composé amphiphile cationique.

11. Formulation selon la revendication 8 caractérisée en ce que ledit dispersant des cristaux d'hydrates est un composé amphiphile anionique.

12. Formulation selon la revendication 8 caractérisée en ce que ledit dispersant des cristaux d'hydrates est un composé amphiphile amphotère.

13. Formulation selon l'une des revendications 3 à 12 caractérisée en ce que les proportions des additifs sont de 5 à 50 % d'agent de nucléation, 5 à 50 % d'inhibiteur de croissance et de 5 à 50 % de dispersants de cristaux d'hydrates.

14. Procédé pour améliorer le transport d'un effluent pétrolier comprenant de l'eau, du gaz et éventuellement une phase hydrocarbonée liquide dans des conditions thermodynamiques où des hydrates peuvent se former à partir de l'eau et du gaz, caractérisé en ce qu'on incorpore audit effluent une formulation selon l'une des revendications 1 à 13.

15. Procédé selon la revendication 14 caractérisé en ce que ladite formulation d'additifs est ajoutée au fluide à une concentration de 0,05 à 5 % en masse par rapport à la teneur en eau présente dans ledit effluent pétrolier.

16. Procédé selon la revendication 14 caractérisé en ce que ladite formulation d'additifs est ajoutée au fluide à une concentration de 0,2 à 2 % en masse par rapport à la teneur en eau présente dans ledit effluent pétrolier.

17. Procédé selon l'une des revendications 14 à 16 caractérisée en ce que la teneur en ledit agent de nucléation est d'au plus 2 % en masse, la teneur en ledit inhibiteur de croissance est d'au plus 2 *%* en masse et la teneur en ledit dispersant est d'au plus 1 % en masse, par rapport à l'eau présente dans ledit effluent pétrolier.

18. Procédé selon l'une des revendications 14 à 16 caractérisée en ce que la teneur en ledit agent de nucléation est d'au plus 0,5 % en masse, la teneur en ledit inhibiteur de croissance est d'au plus 1 % en masse et la teneur en ledit dispersant est d'au plus 0,5 % en masse, par rapport à l'eau présente dans ledit effluent pétrolier.
